# EUROPÄISCHE PATENTSCHRIFT

(11) **EP 0 599 063 B1**
(45) Veröffentlichungstag und Bekanntmachung des Hinweises auf die Patenterteilung: **05.03.1997**
(21) Anmeldenummer: 93117139.1
(22) Anmeldetag: 22.10.1993
(51) Int. Cl.: H02K 7/08, H02K 7/116

(54) **Antriebsaggregat mit einem elektrischen Antriebsmotor**
Drive unit with an electrical driving motor
Unité d'entraînement avec moteur électrique d'entraînement

(30) Priorität: 27.11.1992 DE 4239934
(43) Veröffentlichungstag der Anmeldung: 01.06.1994
(73) Patentinhaber: ROBERT BOSCH GMBH, 70442 Stuttgart (DE)
(72) Erfinder: Rohrer, Günter, Dipl.-Ing. (FH), D-77880 Sasbach (DE); Klapdor, Heinz-Günter, D-77830 Bühlertal (DE); Meier, Arnold, D-77815 Bühl (DE); Stock, Andreas, Dipl.-Ing. (BA), D-76185 Karlsruhe (DE); Reichmann, Siegfried, Dipl.-Ing. (FH), D-77866 Rheinau (DE); Karl, Martin, D-77887 Sasbach (DE); Surkamp, Gundolf, Dipl.-Ing. (FH), D-77815 Bühl (DE)

(56) Entgegenhaltungen:
- EP-A- 0 394 512
- US-A- 2 976 088
- US-A- 5 144 738

## Beschreibung

### Stand der Technik

Die Erfindung geht aus von einem Antriebsaggregat nach der Gattung des Hauptanspruchs. Bei derartigen Antriebsaggregaten bewirkt das Schneckengetriebe einen erheblichen Axialschub der Schneckenwelle, der je nach Drehrichtung des Antriebsmotors bzw. der Schneckenwelle voll gegen eine als Anschlag wirkende, durch das Gehäuse hindurchgeschraubte Stellschraube wirkt. Eine ungenügende Sicherung der Stellschraube hat zur Folge, daß dann durch die Schneckenwelle die Schraube so verstellt werden kann, daß die Welle entweder axiales Spiel erhält, oder daß die Stellschraube gegen die eine, ihr zugewandte Stirnseite der Welle gedreht wird, was zu einem Festlaufen der Schneckenwelle und zum Blockieren des Antriebsmotors führt.

Aus der US-PS 5 144 738 ist ein Antriebsaggregat bekannt, bei dem als Anschlag ein mit einem Konus versehener Puffer eingesetzt ist, der mittels einer Blechscheibe arretiert wird.

Es ist ferner ein Antriebsaggregat bekannt, bei dem die Verdrehsicherung der Schneckenwelle durch Verstemmen der Gewindebohrung in dem Metallgehäuse erreicht wird. Eine derartige Arretierung ist zwar kostengünstig, doch ist sie nicht praktikabel, wenn das Gehäuse aus einem spröden Werkstoff oder auch aus Kunststoff besteht. Auch ein Verkleben der Stellschraube in der Gewindebohrung kann keine dauerhafte Verdrehsicherung der Stellschraube gewährleisten, weil die Kleber nicht sicher auf der Kunststoffoberfläche haften und/oder mit der Zeit altern, so daß ein Verdrehen der Verstellschraube und die damit verbundenen Nachteile nicht ausgeschlossen werden können.

### Vorteile der Erfindung

Das erfindungsgemäße Antriebsaggregat mit den kennzeichnenden Merkmalen des Hauptanspruchs hat demgegenüber den Vorteil, daß so eine einfache und wirksame Axialspielbegrenzung geschaffen ist, die auf lange Zeit einen problemlosen Betrieb des Antriebsaggregats sicherstellt.

Durch die in den Unteransprüchen aufgeführten Maßnahmen sind vorteilhafte Weiterbildungen und Verbesserungen des im Hauptanspruch angegebenen Antriebsaggregat möglich.

### Zeichnung

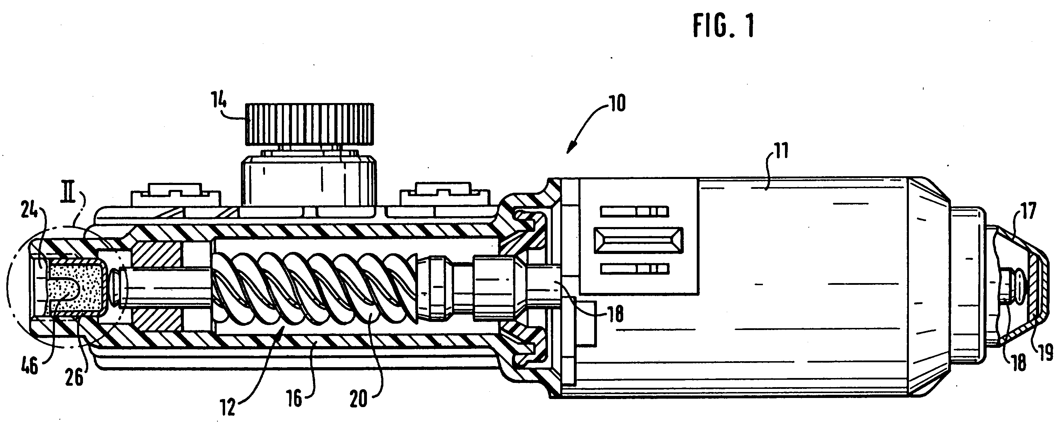

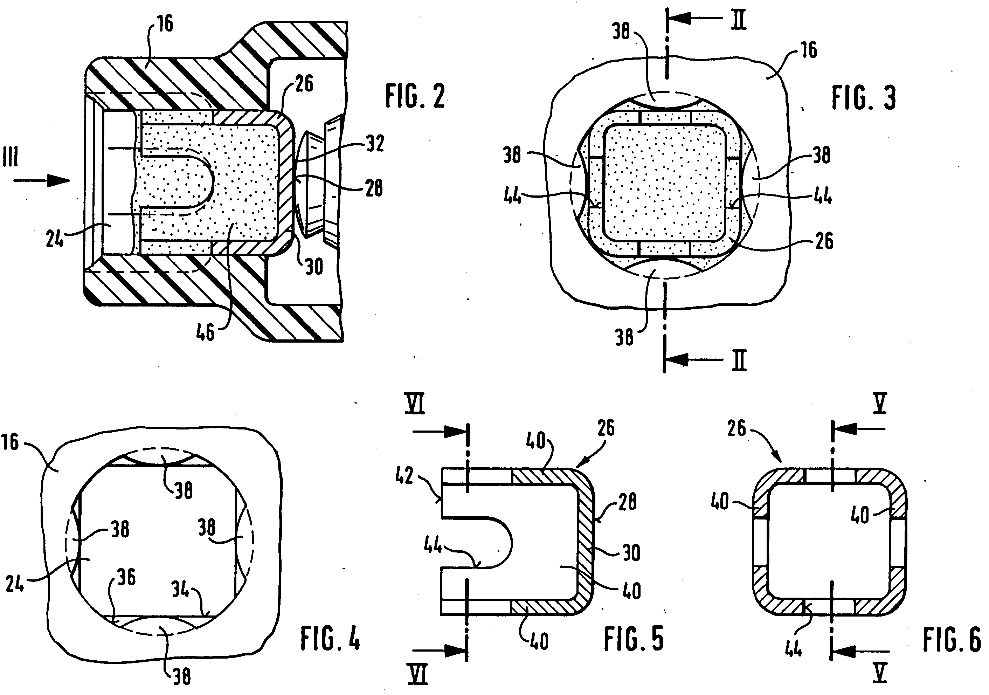

Ein Ausführungsbeispiel der Erfindung ist in der Zeichnung dargestellt und in der nachfolgenden Beschreibung näher erläutert. Es zeigen Figur 1 eine Ansicht eines Antriebsaggregats, teilweise geschnitten, Figur 2 eine Einzelheit bei II in Figur 1, in vergrößerter Darstellung, Figur 3 eine Teil-Draufsicht auf das Antriebsaggregat gemäß Figur 1 in Richtung des Pfeiles III in Figur 2 gesehen, Figur 4 die Draufsicht gemäß Figur 3, wobei das Anschlagteil aus dem Gehäuse entfernt ist, Figur 5 einen Längsschnitt durch das Anschlagteil entlang der Linie V-V in Figur 6 und Figur 6 einen Schnitt durch das Anschlagteil entlang der Linie VI-VI in Figur 5.

### Beschreibung des Ausführungsbeispiels

Ein in Figur 1 dargestelltes Antriebsaggregat 10 weist einen elektrischen Antriebsmotor 11 auf, dem ein Schneckengetriebe 12 nachgeordnet ist. Das Schneckengetriebe 12 hat ein Abtriebsritzel 14, durch welches das Antriebsaggregat 10 beispielsweise mit dem Antriebsmechanismus eines Kraftfahrzeug-Schiebedachs oder dergleichen verbunden werden kann. Das Schneckengetriebe 12 ist in einem Gehäuse 16 untergebracht, das fest mit einem zum Antriebsmotor 11 gehörenden Gehäuses 17 verbunden ist und mit diesem zusammen ein Aggregat-Gehäuse bildet, welches den Antriebsmotor 10 und das Schneckengetriebe 12 vollständig umschließt. Beim Ausführungsbeispiel hat die zum Schneckengetriebe 12 gehörende Schneckenwelle 20 eine Verlängerung 18, welche die Ankerwelle des Antriebsmotors 11 bildet. Da die Ankerwelle 18 und die Schneckenwelle 20 eine Baueinheit bilden, gilt alles was im folgenden zur Schneckenwelle 20 gesagt wird sinngemäß auch für die Ankerwelle 18 des Antriebsmotors 11. Es ist einleuchtend, daß es in der Praxis gleichgültig ist, ob eine Längsspiel-Anschlagssicherung an der freien Stirnfläche der Schneckenwelle 20 oder an der freien Stirnfläche der Ankerwelle 18 angebracht wird. In beiden Fällen wird die als Baueinheit anzusehende Welle, bestehend aus Ankerwelle 18 und Schneckenwelle 20 in Achsrichtung spielfrei eingestellt.

Wie Figur 1 zeigt, weist das zu Motor 11 gehörende Gehäuseteil 17 des Aggregatgehäuses 16, 17 einen Anschlag 19 auf, der an diesem festgehalten ist. In Verlängerung der Schneckenwelle 20 gesehen, hat das Getriebegehäuse 16 auf der vom Anschlag 19 abgewandten Seite einen Durchbruch 24, in dem ein im wesentlichen topfförmiges Anschlagteil 26 angeordnet ist. Die Anordnung dieses Anschlagteils 26 ist dabei so getroffen, daß es mit der Außenseite 28 des Topfbodens 30 an der Endfläche 32 der Schneckenwelle 20 anliegt.

Wie insbesondere die Figuren 3, 5 und 6 zeigen, hat das Anschlagteil 26, bezogen auf die Topflängsachse, einen von der Kreisform abweichenden Querschnitt. Diese Querschnittsform ist beim Ausführungsbeispiel im wesentlichen quadratisch. Der Querschnittsform des Anschlagteils 26 ist die Form des Durchbruchs 24 angepaßt. Dadurch wird auf einfache Weise eine Verdrehsicherung des Anschlagteils 26 im Durchbruch 24 sichergestellt. Diese auf die Querschnittsform des Anschlagteils 26 angepaßte Form des Durchbruchs 24 erstreckt sich von der Innenseite des Gehäuses aus, d. h. also von der Schneckenwelle 20 aus nur über einen Teilbereich des Gehäuses 16. Der Durchbruch 24 ist von der Außenseite des Gehäuses 16 her über einen Teilabschnitt im Querschnitt größer als der innere, der Querschnittsform des Anschlagteil 26 angepaßte Abschnitt des Durchbruchs 24. Beim Ausführungsbeispiel ist die innere, auf die Querschnittsform des Anschlagteils 6 und 20 abgestimmte Querschnittsform mit der Bezugszahl 34 versehen worden (Figur 4). Der äußere Abschnitt des Durchbruchs 34 ist in Figur 4 mit 36 bezeichnet. Dieser äußere Bereich hat die Form eines Umkreises in dem die quadratische Querschnittsform des Anschlagteils 26 liegt. An den den Seitenflächen des Anschlagteils 26 benachbarten Bereichen hat dieser Umkreis Vorsprünge 38 welche bis nahe an die Seitenkanten des quadratischen Durchbruchsbereichs heranführen (Figuren 3 und 4). Weiter zeigen diese Figuren, daß sich in diesen Vorsprüngen 38 Rillen befinden (durch die gestrichelten Linien angedeutet), welche beispielsweise durch die Anordnung eines Gewindes gebildet sein können. Schließlich zeigen die Figuren 5 und 6, daß in den Topfwänden 40 des Anschlagteils 26 zum Topfrand 42 offene, schlitzartige Ausnehmungen 44 angeordnet sind.

Bei der Montage des Antriebsaggregats 10 ist dafür zu sorgen, daß die Welle 18, 20 ordnungsgemäß am Anschlag 19 zur Anlage kommt. Um eine axialspielfreie Montage dieser Welle 16, 18 zu erreichen, wird nun das topfförmige Anschlagteil 26 in den Durchbruch 24 eingesetzt, bis die Außenseite 28 des Topfbodens 30 an der Endfläche 32 der Schneckenwelle 20 spielfrei anliegt. Danach wird, vorzugsweise bei aufgestellten Aggregat 10, in den Durchbruch 24 eine Vergußmasse, vorzugsweise ein bei UV-Licht rasch aushärtender Metallkleber, eingefüllt, der von der Topfform des Anschlagteils 26 aus über die Ausnehmungen 44 in die Bereiche des Durchbruchs 24 übertritt, wo der Querschnitt des Durchbruchs 24 größer ist als der Querschnitt des Anschlagteils 26, dadurch gelangt die Vergußmasse auch in die Rillen der Vorsprünge 38, so daß eine hervorragende Axialsicherung des Anschlagteils 26 erreicht ist.

## Patentansprüche

1. Antriebsaggregat mit einem elektrischen Antriebsmotor (11) und einem mit diesem wirkverbundenen, dem Motor (11) nachgeordneten Schneckengetriebe (12), dessen Schneckenwelle (20) vorzugsweise eine die Ankerwelle (18) des Motors (11) bildende Verlängerung aufweist und die Schneckenwelle (20) zwischen zwei deren stirnseitigen Endflächen zugewandten Anschläge (19, 26) längsspielfrei gehalten ist, wobei der eine Anschlag (19) fest an einem das Aggregat (10) umgebenden Gehäuse (16, 17) angeordnet ist und wobei das Gehäuse (16, 17) in Verlängerung der Schneckenwelle (18, 20) gesehen, auf der von dem einen Anschlag (19) abgewandten Seite einen Durchbruch (24) hat, in den ein eine Anschlagschulter (28) aufweisendes Anschlagteil (26) eingesetzt ist, dadurch gekennzeichnet, daß das Anschlagteil (26) auf seiner von der Anschlagschulter abgewandten Seite mit wenigstens einer Aussparung (44) versehen ist, die mittels einer Vergußmasse ausgegossen, eine Lagesicherung des Anschlagsteils (26) in dem Durchbruch (24) ergibt.

2. Antriebsaggregat nach Anspruch 1, dadurch gekennzeichnet, daß das Anschlagteil (26) im wesentlichen topfförmig ausgebildet ist und mit der Außenseite (28) des Topfbodens (30) der anderen Endfläche (32) der Schneckenwelle (18, 20) zugewandt eingesetzt und mittels der Vergußmasse (46) in dem Durchbruch (24) befestigt ist.

3. Antriebsaggregat nach Anspruch 2, dadurch gekennzeichnet, daß bezogen auf die Topf-Längsachse das Anschlagteil (26) einen von der Kreisform abweichenden Querschnitt hat und daß dieser Querschnittsform die Form des Durchbruchs (24) im Gehäuse angepaßt ist.

4. Antriebsaggregat nach einem der Ansprüche 2 oder 3, dadurch gekennzeichnet, daß die Topfwand (40) des Anschlagteils (26) wenigstens eine, zum Topfrand (42) offene Ausnehmung (44) aufweist.

5. Antriebsaggregat nach einem der Ansprüche 3 oder 4, dadurch gekennzeichnet, daß der Durchbruch (24) von der Außenseite des Gehäuses (16) der einen Querschnitt hat, der größer ist als der das Anschlagteil (26) führende innere Abschnitt des Durchbruchs (24).

6. Antriebsaggregat nach Anspruch 5, dadurch gekennzeichnet, daß der äußere Abschnitt (36) des Durchbruchs (24) an seiner Wand mit Rillen versehen ist.

7. Antriebsaggregat nach einem der Ansprüche 3 bis 6, dadurch gekennzeichnet, daß die Querschnittsformen des Anschlagteils (26) und des das Anschlagteil führenden Abschnitts des Durchbruchs im Gehäuse (16) im wesentlichen quadratisch sind.

8. Antriebsaggregat nach einem der Ansprüche 1 bis 7, dadurch gekennzeichent, daß die Vergußmasse ein in UV-Licht rasch aushärtender Metallkleber ist.

## Claims

1. Drive unit with an electric drive motor (11) and a worm gear (12) which is effectively connected to the said drive motor (11) and is arranged downstream thereof and whose worm shaft (20) preferably has an extension which forms the armature shaft (18) of the motor (11) and the worm shaft (20) is held without longitudinal play between two stops (19, 26) facing its end faces, the one stop (19) being permanently arranged on a housing (16, 17) which surrounds the unit (10), and the housing (16, 17) having, viewed in the extension of the worm shaft (18, 20), an opening (24) on the side facing away from the one stop (19), into which opening (24) a stop part (26) which has a stop shoulder (28) is inserted, characterized in that the stop part (26) is provided on its side facing away from the stop shoulder with at least one cut-out (44) which, filled with a casting compound, provides positional securing of the stop part (26) in the opening (24).

2. Drive unit according to Claim 1, characterized in that the stop part (26) is of essentially pot-shaped construction and is inserted with the outside (28) of the base (30) of the pot facing the other end face (32) of the worm shaft (18, 20) and is attached in the opening (24) by means of the casting compound (46).

3. Drive unit according to Claim 2, characterized in that, in relation to the longitudinal axis of the pot, the stop part (26) has a cross-section which deviates from the circular shape, and in that the shape of the opening (24) in the housing is matched to this cross-sectional shape.

4. Drive unit according to one of Claims 2 or 3, characterized in that the pot wall (40) of the stop part (26) has at least one recess (44) which is open with respect to the edge (42) of the pot.

5. Drive unit according to one of Claims 3 or 4, characterized in that the opening (24), viewed from the outside of the housing (16), has a cross-section which is greater than the inner section of the opening (24) which guides the stop part (26).

6. Drive unit according to Claim 5, characterized in that the outer section (36) of the opening (24) is provided with grooves on its wall.

7. Drive unit according to one of Claims 3 to 6, characterized in that the cross-sectional shapes of the stop part (26) and of that section of the opening in the housing (16) which guides the stop part are essentially square.

8. Drive unit according to one of Claims 1 to 7, characterized in that the casting compound is a metal bonding agent which cures quickly in ultraviolet light.

## Revendications

1. Unité d'entraînement à moteur électrique (11) et une transmission à vis (12) en aval du moteur (11) et coopérant avec celui-ci, la vis sans fin (20) de cette transmission constituant de préférence le prolongement de l'axe d'induit (18) du moteur (11) et cette vis sans fin (20) est maintenue sans jeu longitudinal entre deux butées (19, 26) tournées vers les faces frontales d'extrémité, l'une des butées (19) étant solidaire du boîtier (16, 17) entourant l'unité (10) et le boîtier (16, 17) comporte, dans le prolongement de l'axe (18, 20), un passage (24), du côté opposé d'une butée (19), passage recevant une pièce de butée (26) ayant un épaulement de butée (28),
caractérisée en ce que
la pièce (26) est munie, sur son côté opposé à l'épaulement de butée, d'au moins une découpe (44) remplie d'une masse coulée assurant le blocage en position de la pièce (26) dans le passage (24).

2. Unité d'entraînement selon la revendication 1,
caractérisée en ce que
la pièce (26) a essentiellement une forme de pot et est logée par sa face extérieure (28) du fond (30) de la forme de pot pour être tournée vers l'autre surface d'extrémité (32) de la vis (18, 20) et est fixée dans le passage (24) à l'aide de la masse coulée (46).

3. Unité d'entraînement selon la revendication 2,
caractérisée en ce que
par rapport à l'axe longitudinal de la forme de pot, la pièce de butée (26) a une section différente d'une section circulaire et cette forme de section est adaptée à la forme du passage (24) du boîtier.

4. Unité d'entraînement selon l'une des revendications 2 ou 3,
caractérisée en ce que
la paroi (40) de la forme de pot de la pièce de butée (26) présente au moins une découpe (44) ouverte en direction du bord (42) de la forme de pot.

5. Unité d'entraînement selon l'une des revendications 3 ou 4,
caractérisée en ce que
le passage (24) a une section plus grande du côté extérieur du boîtier (16) que celle du segment intérieur du passage (24) servant au guidage de la pièce de butée (26).

6. Unité d'entraînement selon la revendication 5,
caractérisée en ce que
le segment extérieur (36) du passage (24) a une paroi munie de rainures.

7. Unité d'entraînement selon l'une des revendications 3 à 6,
caractérisée en ce que
les formes des sections de la pièce de butée (26) et du segment du passage guidant la pièce de butée dans le boîtier (16) sont essentiellement carrées.

8. Unité d'entraînement selon l'une des revendications 1 à 7,
caractérisée en ce que
la masse coulée est une colle à métaux qui durcit rapidement sous l'effet des rayons UV.
